# DEMANDE DE BREVET EUROPEEN

(11) **EP 1 464 803 A2**
(43) Date de publication de la demande: **06.10.2004**
(21) Numéro de dépôt: 04300184.1
(22) Date de dépôt: 02.04.2004
(51) Int. Cl.: F02B 1/04

(54) **Moteur à combustion interne à injection indirecte essence et à allumage commandé**

(30) Priorité: 04.04.2003 FR 0304239
(71) Demandeur: Peugeot Citroen Automobiles, 78140 Velizy-Villacoublay (FR)
(72) Inventeur: Robinet, Cyril, 91430 Igny (FR)
(74) Mandataire: De Cuenca, Emmanuel Jaime

(57) **Abrégé**

L'invention concerne un moteur à combustion interne à injection indirecte essence et à allumage commandé comprenant au moins un cylindre (1), un piston (3) monté coulissant dans le cylindre (1) et relié à un vilebrequin, une chambre de combustion (4) définie dans le cylindre (1), des moyens d'injection (5) d'essence, des moyens (6) d'allumage destiné à produire une inflammation du mélange air-essence dans la chambre de combustion, des soupapes d'admission (7) et d'échappement (81) obturant sélectivement la chambre de combustion (4), des moyens de pompage (8, 18) destinés à fournir aux moyens d'injection (5) de l'essence sous pression, caractérisé en ce que les moyens d'injection (5) sont conformés pour injecter l'essence avec une très haute pression et/ou une très haute perméabilité, de façon à injecter la quantité totale de carburant d'un cycle de combustion dans un intervalle de temps inférieur à la durée correspondant à 100 degrés vilebrequin environ, et de préférence, inférieur à 30 degrés vilebrequin.

## Description

L'invention se rapporte à un moteur à combustion interne à injection indirecte essence et à allumage commandé.

L'invention concerne plus particulièrement un moteur à combustion interne à injection indirecte essence et à allumage commandé comprenant au moins un cylindre, une culasse obturant le cylindre, un piston monté coulissant dans le cylindre et relié à un vilebrequin, une chambre de combustion définie dans le cylindre entre une face supérieure du piston et une face inférieure de la culasse, des moyens d'injection d'essence, des moyens d'allumage destiné à produire une inflammation du mélange air-essence dans la chambre de combustion, des soupapes d'admission et d'échappement obturant sélectivement la chambre de combustion, des moyens de pompage destinés à fournir aux moyens d'injection de l'essence sous pression.

Dans un tel moteur à injection indirecte, les moyens d'injection injectent l'essence dans la tubulure d'admission, c'est-à-dire en amont de la chambre de combustion.

Pour inhiber le phénomène de cliquetis dans un moteur à essence, c'est-à-dire une auto-inflammation non désirée de la charge dans la chambre de combustion, il est connu de chasser de la chambre de combustion les produits de combustion résiduels de la combustion précédente. Dans le cas d'un moteur à essence à injection directe, cette opération est réalisée par de l'air frais admis à circuler dans la chambre de combustion.

Dans le cas d'un moteur à essence à injection indirecte, et notamment dans le cas d'un fonctionnement à puissance maximale, la durée d'injection de l'essence correspond sensiblement à la durée totale du cycle moteur. De ce fait, il n'est pas possible de balayer les produits de combustion interne sans augmenter les émissions polluantes et la consommation du fait du passage directe de l'admission à l'échappement de pré-mélange air-essence.

Un but de la présente invention est de pallier tout ou partie des inconvénients de l'art antérieur relevés ci-dessus et de proposer un moteur à combustion interne à injection indirecte essence et à allumage commandé.

A cette fin, le moteur selon l'invention, par ailleurs conforme à la définition générique qu'en donne le préambule ci-dessus, est essentiellement caractérisé en ce que les moyens d'injection sont conformés pour injecter l'essence avec une très haute pression et/ou une très haute perméabilité, de façon à injecter la quantité totale de carburant d'un cycle de combustion dans un intervalle de temps inférieur à la durée correspondant à 100 degrés vilebrequin environ, et de préférence, inférieur à 30 degrés vilebrequin.

Par ailleurs, l'invention peut comporter l'une ou plusieurs des caractéristiques suivantes :
- la pression de l'essence fournie aux moyens d'injection par les moyens de pompage (8, 18) dépasse 250 bars,
- les moyens de pompage alimentent les moyens d'injection de façon à injecter l'essence dans un intervalle de temps coïncidant au moins en partie avec la levée maximale de la ou des soupapes d'admission,
- les moyens de pompage alimentent les moyens d'injection de façon à injecter l'essence dans un intervalle de temps centré sur le moment de levée maximale de la ou des soupapes d'admission,
- la pression de l'essence fournie aux moyens d'injection par les moyens de pompage (8, 18) atteint ou dépasse 500 bars,
- les moyens d'injection comportent deux injecteurs distincts,
- les moyens d'injection comportent deux injecteurs distincts ayant des perméabilités et/ou des pressions d'injection différentes,
- le premier injecteur ayant la perméabilité la plus faible est destiné à assurer l'injection d'essence dans les plages de fonctionnement du moteur allant du fonctionnement de la marche à vide jusqu'au trois/quart environ de la pleine charge, le second injecteur étant destiné à assurer l'injection d'essence dans les plages de fonctionnement du moteur allant de trois quarts environ de la pleine charge jusqu'à la pleine charge,
- les moyens d'injection sont conformés et orientés de façon que les jets d'essence dans le conduit d'admission ne frappent pas directement ou peu les soupapes et les parois du conduit d'admission.

D'autres particularités et avantages apparaîtront à la lecture de la description ci-après, faite en référence aux figures dans lesquelles :
- la figure 1 représente une vue en coupe schématique d'une partie d'un moteur à combustion interne selon l'invention,
- la figure 2 représente une vue en coupe schématique d'une partie d'un moteur à combustion interne selon un autre mode de réalisation préféré de l'invention,
- la figure 3 représente un exemple de réalisation préféré de l'injection d'essence au cours d'un cycle de fonctionnement du moteur selon l'invention.

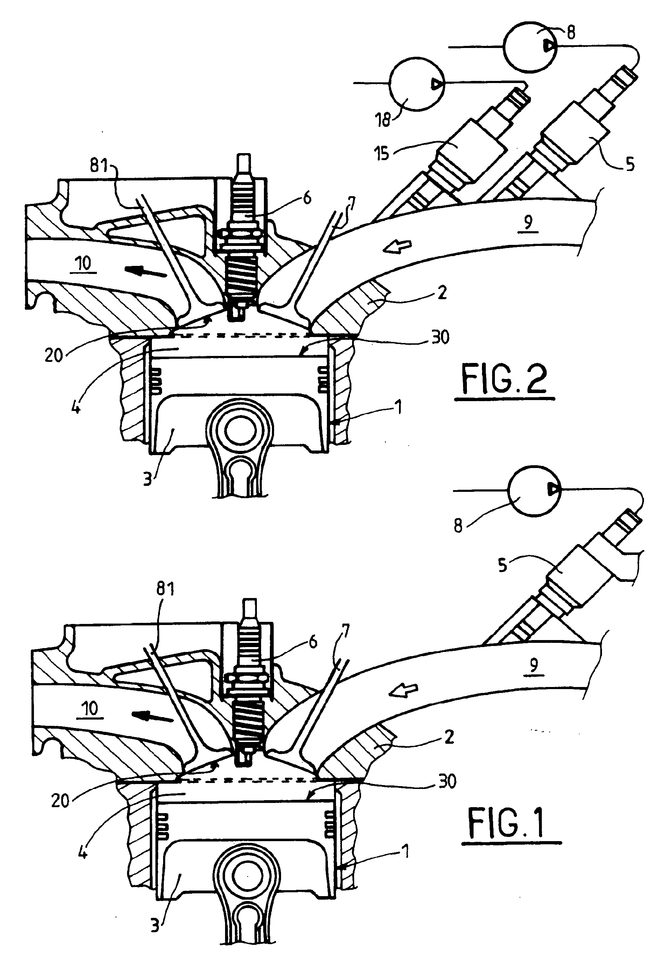

Le moteur représenté à la figure 1 comporte un cylindre 1, une culasse 2 obturant le cylindre 1, un piston 3 monté coulissant dans le cylindre 1 et relié à un vilebrequin. Par souci de simplification, le vilebrequin et d'autres éléments non essentiels à la compréhension de l'invention n'ont pas été représentés. Une chambre de combustion 4 est définie dans le cylindre 1 entre une face supérieure 30 du piston 3 et une face inférieure 20 de la culasse 2.

Le moteur comprend également des moyens d'injection 5 d'essence constitués d'un injecteur débouchant dans un conduit d'admission 9. Le moteur comporte également des moyens 6 d'allumage tel qu'une bougie, destiné à produire une inflammation du mélange air-essence dans la chambre de combustion. Des soupapes d'admission 7 et d'échappement 8 sont par ailleurs prévues pour obturer sélectivement des passages entre la chambre de combustion 4 et, respectivement, un conduit d'admission 9 et un conduit d'échappement 10.

Des moyens de pompage 8 tels qu'une pompe à essence sont prévus pour fournir à l'injecteur 5 de l'essence sous pression.

Selon l'invention, l'injecteur 5 est conformé pour injecter l'essence avec une très haute pression et/ou une très haute perméabilité, de façon injecter la quantité totale de carburant d'un cycle de combustion dans un intervalle de temps inférieur à la durée correspondant à 100 degrés vilebrequin environ.

De préférence, la quantité totale d'essence pour un cycle de combustion est injectée dans un intervalle de temps inférieur à 30 degrés vilebrequin pour un régime moteur compris entre 3000 et 6000 tr./min. environ.

Cette stratégie d'injection plus rapide permet de libérer du temps au début du cycle moteur (phase d'admission) pour assurer un balayage des produits de combustion résiduels du cycle précédent. De ce fait, le moteur selon l'invention est moins sujet au cliquetis que dans l'art antérieur.

Cette injection de durée réduite assure meilleure atomisation du jet d'essence qui permet, pour une performance donnée, de diminuer les émissions de particules et/ou fumées par rapport à l'art antérieur.

La durée d'injection réduite selon l'invention peut ainsi être réalisée en augmentant la section de passage du carburant dans l'injecteur pour une pression donnée (perméabilité). Cette durée d'injection réduite peut également être obtenue en augmentant la pression d'injection, pour une section de passage donnée.

Selon l'invention, la pression de l'essence fournie à l'injecteur 5 par la pompe 8 dépasse 250 bars et, de préférence atteint ou dépasse 500 bars.

De préférence, la pompe 8 alimente l'injecteur 5 de façon à injecter l'essence dans un intervalle de temps Ti coïncidant au moins en partie avec la levée maximale de la soupape 7 d'admission.

Dans le cas où les moyens d'injection ont une très haute perméabilité, la pression d'injection de l'essence est comprise de préférence entre 3 et 20 bars.

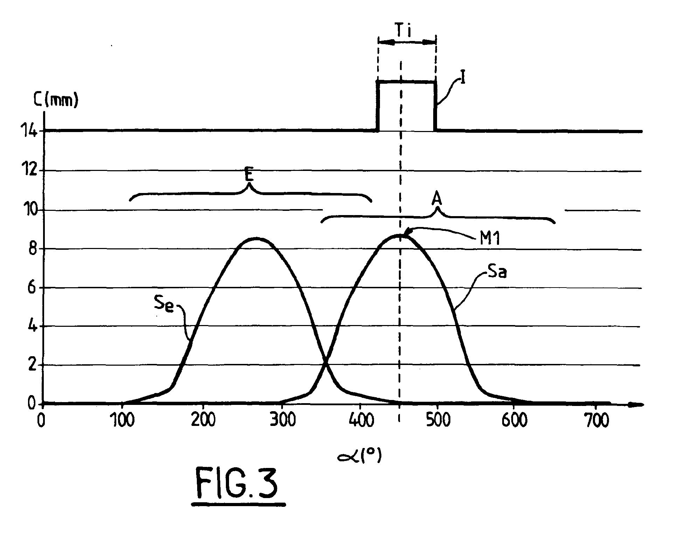

La figure 3 représente un exemple de stratégie de commande des soupapes et d'injection selon l'invention. Les déplacements des soupapes d'échappement Se et d'admission Sa sont représentés dans un graphique ayant pour abscisse l'angle α vilebrequin en degrés (°), et pour ordonnée la course C de la soupape en mm. Les deux courbes Se, Sa délimitent ainsi des périodes d'échappement E et d'admission A.

Dans la partie supérieure du graphique est superposé le chronogramme symbolisant par un signal carré l'injection I du carburant au cours du cycle moteur concerné. Comme représenté, l'essence est injectée par l'injecteur 5 dans un intervalle de temps Ti centré sur le moment M1 de levée maximale de la soupape 7 d'admission.

C'est à dire que l'injection de l'essence commence 50 degrés vilebrequin, et de préférence 15 degrés, avant la position de levée maximale de la soupape d'admission M1 et se termine 50 degrés vilebrequin, et de préférence 15 degrés, après cette levée maximale M1.

L'injecteur 5 est disposé et orienté dans le conduit d'admission 9 de façon que les jets d'essence injectés dans le conduit d'admission 9 ne frappent pas directement ou peu les soupapes 7 et les parois du conduit 9 d'admission.

Le mode de réalisation de la figure 2 se distingue de celui de la figure 1 uniquement par le fait qu'il comporte deux injecteurs d'essence 5, 15 distincts disposés dans le conduit d'admission 9. Par souci de simplification, les éléments identiques à ceux décrits ci-dessus sont désignés par les mêmes références numériques et ne sont pas décrits à nouveau en détail.

Comme représenté, chaque injecteur 5, 15 peut être relié à une rampe d'injection et à une pompe 8, 18 respectives.

En fonction des besoins d'injection et notamment de la charge du moteur, les deux injecteurs 5, 15 peuvent être utilisés à la suite l'un de l'autre ou simultanément.

De préférence, les injecteurs 5, 15 ont des perméabilités différentes et/ou des pressions d'injection différentes. Par exemple, le premier injecteur 5 ayant la perméabilité la plus faible peut être prévu pour assurer l'injection d'essence dans les plages de fonctionnement du moteur allant du fonctionnement de la marche à vide jusqu'au trois/quart environ de la pleine charge. Le second injecteur 15 peut quant à lui être prévu pour assurer l'injection d'essence dans les plages de fonctionnement du moteur allant de trois quarts environ de la pleine charge jusqu'à la pleine charge.

L'invention permet ainsi d'adapter la perméabilité des moyens d'injection d'essence de façon à pouvoir injecter une quantité maximale de carburant dans un laps de temps réduit.

L'invention s'applique de manière avantageuse notamment aux moteurs à essence fortement suralimentés, c'est-à-dire aux moteur ayant une Pression Moyenne Effective (PME) supérieure à 15 bars.

L'invention peut s'appliquer aux moteurs à injection indirecte d'essence à deux temps ou à quatre temps.

## Revendications

1. Moteur à combustion interne à injection indirecte essence et à allumage commandé comprenant au moins un cylindre (1), une culasse (2) obturant le cylindre (1), un piston (3) monté coulissant dans le cylindre (1) et relié à un vilebrequin, une chambre de combustion (4) définie dans le cylindre (1) entre une face supérieure (30) du piston (3) et une face inférieure (20) de la culasse (2), des moyens d'injection (5, 15) d'essence, des moyens (6) d'allumage destiné à produire une inflammation du mélange air-essence dans la chambre de combustion, des soupapes d'admission (7) et d'échappement (8) obturant sélectivement la chambre de combustion (4), des moyens de pompage (8, 18) destinés à fournir aux moyens d'injection (5, 15) de l'essence sous pression, **caractérisé en ce que** les moyens d'injection (5, 15) sont conformés pour injecter l'essence avec une très haute pression et/ou une très haute perméabilité, de façon à injecter la quantité totale de carburant d'un cycle de combustion dans un intervalle de temps inférieur à la durée correspondant à 100 degrés vilebrequin environ, et de préférence, inférieur à 30 degrés vilebrequin et **en ce que** les moyens de pompage (8, 18) alimentent les moyens d'injection (5, 15) de façon à injecter l'essence dans un intervalle de temps (Ti) coïncidant au moins en partie avec la levée maximale de la ou des soupapes (7) d'admission.

2. Moteur selon la revendication 1, **caractérisé en ce que** la pression de l'essence fournie aux moyens d'injection (5, 15) par les moyens de pompage (8, 18) dépasse 250 bars.

3. Moteur selon l'une quelconque des revendications 1 ou 2, **caractérisé en ce que** les moyens de pompage (8, 18) alimentent les moyens d'injection (5, 15) de façon à injecter l'essence dans un intervalle de temps (Ti) centré sur le moment (M1) de levée maximale de la ou des soupapes (7) d'admission.

4. Moteur selon l'une quelconque des revendications 1 à 3, **caractérisé en ce que** la pression de l'essence fournie aux moyens d'injection (5, 15) par les moyens de pompage (8, 18) atteint ou dépasse 500 bars.

5. Moteur l'une quelconque des revendications 1 à 4, **caractérisé en ce que** les moyens d'injection (5, 15) comportent deux injecteurs distincts (5, 15).

6. Moteur selon la revendication 5, **caractérisé en ce que** les moyens d'injection (5, 15) comportent deux injecteurs distincts (5, 15) ayant des perméabilités et/ou des pressions d'injection différentes.

7. Moteur selon la revendication 6, **caractérisé en ce que** le premier injecteur (5) ayant la perméabilité la plus faible est destiné à assurer l'injection d'essence dans les plages de fonctionnement du moteur allant du fonctionnement de la marche à vide jusqu'au trois/quart environ de la pleine charge, le second injecteur (15) étant destiné à assurer l'injection d'essence dans les plages de fonctionnement du moteur allant de trois quarts environ de la pleine charge jusqu'à la pleine charge.

8. Moteur selon l'une quelconque des revendications 1 à 7, **caractérisé en ce que** les moyens d'injection (5, 15) sont conformés et orientés de façon que les jets d'essence dans le conduit d'admission (9) ne frappent pas directement ou peu les soupapes (7) et les parois du conduit (9) d'admission.
